# EUROPÄISCHE PATENTSCHRIFT

(11) **EP 3 007 958 B1**
(45) Veröffentlichungstag und Bekanntmachung des Hinweises auf die Patenterteilung: **11.07.2018**
(21) Anmeldenummer: 14725189.6
(22) Anmeldetag: 21.05.2014
(51) Int. Cl.: B32B 3/08, B32B 3/28, B29L 31/30, B62D 21/11, B62D 29/04, B32B 5/26, B29C 70/20

(54) **ACHSTRÄGER EINES KRAFTFAHRZEUGS MIT EINEM VERSTEIFUNGSELEMENT AUS FASERVERBUNDWERKSTOFF**
AXLE SUPPORT FOR A MOTOR VEHICLE HAVING A REINFORCING ELEMENT MADE OF FIBROUS COMPOSITE MATERIAL
SUPPORT D'ESSIEU D'UN VÉHICULE COMPORTANT UN ÉLÉMENT DE RENFORCEMENT EN MATÉRIAU COMPOSITE RENFORCÉ PAR DES FIBRES

(30) Priorität: 13.06.2013 DE 102013211069
(43) Veröffentlichungstag der Anmeldung: 20.04.2016
(73) Patentinhaber: Bayerische Motoren Werke Aktiengesellschaft, 80809 München (DE)
(72) Erfinder: KELLER, David, 80638 München (DE); STENZENBERGER, Alfred, 86681 Fuenfstetten (DE); HAMMER, Ulrich, 81677 München (DE)
(74) Vertreter: Schmidt, Günter H. H.
(86) Internationale Anmeldenummer: PCT/EP2014/060409
(87) Internationale Veröffentlichungsnummer: WO 2014/198507

(56) Entgegenhaltungen:
- EP-A1- 0 594 131
- EP-A1- 2 360 082
- EP-A2- 1 712 451
- EP-A2- 2 246 180
- EP-A2- 2 527 231
- DE-A1-102008 006 006

## Beschreibung

Die vorliegende Erfindung betrifft einen Achsträger eines Kraftfahrzeugs mit einem als Faserverbundbauteil ausgebildeten Versteifungselement nach dem Oberbegriff des Anspruchs 1. Zum Stand der Technik wird insbesondere auf die DE 10 2008 006 006 A1 verwiesen, daneben sei die EP 0 941 912 b1 als ein weiteres Beispiel für einen Kfz-Achsträger (dort auch "Hilfsrahmen" genannt) mit einem flächigen Versteifungselement (dort auch "Schubfeld" genannt) und ferner die EP 2 360 082 A1 genannt.

In einem Kraftfahrzeug wirken auf die Achsträger, also auf den Vorderachsträger und auf den Hinterachsträger im Fall eines Crashs (Unfalls, Aufpralls auf oder Zusammenstoßes mit einem Hindernis) starke Kräfte ein, die zur Verformung und partiellen Zerstörung des jeweiligen Achsträgers und damit stellenweise auch der damit verbundenen Karosserie führen können. Zur Erhöhung der Crash-Sicherheit eines Kraftfahrzeugs werden daher Versteifungselemente, sogenannte Schubfelder, mit den Achsträgern verbunden, vorzugsweise (lösbar) verschraubt, die eine relativ hohe Steifigkeit und Torsionssteifigkeit aufweisen und einen Aufprallimpuls geeignet im Achsträger zu verteilen und/oder damit in Strukturen des Kraftfahrzeugs abzuleiten in der Lage sind. Solche herkömmlichen Versteifungselemente werden aus metallischen Werkstoffen, insbesondere aus Stahl oder Aluminium, hergestellt. Dadurch wird ein hohes Gewicht in das Kraftfahrzeug eingetragen. Um dies zu vermeiden, wurde bereits ein aus einem Faserverbundwerkstoff (bzw. aus einem mit Fasern verstärkten Kunststoff) bestehendes bzw. hergestelltes flächiges Achsträger-Versteifungselement vorgeschlagen, vgl. die eingangs erstgenannte Schrift. Weiterhin ist bspw. aus der EP 2 360 082 A1 ein Längsträger eines Fahrgestells bekannt, der aus einem Kern besteht, um den mehrere Lagen von Faserverbund-Matten gewickelt sind.

Hiermit soll aufgezeigt werden, wie ein Faserverbund-Versteifungselement eines Fzg.-Achsträgers nach dem Oberbegriff des Anspruchs 1 hinsichtlich seiner mechanischen Eigenschaften insbesondere für den Fall eines Fahrzeug-Crashs weiter verbessert werden kann (= Aufgabe vorliegender Erfindung).

Die Lösung dieser Aufgabe ergibt sich mit den kennzeichnenden Merkmalen des Anspruchs 1; vorteilhafte Aus- und Weiterbildungen sind Inhalt der Unteransprüche.

Ein erfindungsgemäßes Versteifungselement ist in Form eines zumindest annähernd flächigen Faserverbundbauteils gestaltet und es sind zwischen dessen im Einbauzustand am Fzg.-Achsträger dem Fzg.-Aufbau zugewandten Oberseite (= obere Decklage) und dessen der Fahrbahn zugewandten Unterseite (= untere Decklage) gerichtete Endlosfaser-Bänder im Faserverbundmaterial integriert. Dabei ist vorgesehen, dass eine untere und somit der genannten unteren Decklage benachbarte und aus mehreren einzelnen Faserbändern gebildete Lage von Faserbändern und eine obere und somit der genannten oberen Decklage benachbarte und aus mehreren einzelnen Faserbändern gebildete Lage von Faserbändern durch eine sog. Zwischenlage, die praktisch deckungsgleich mit den Decklagen ist, voneinander getrennt sind. Während sich somit die beiden Decklagen und die genannte Zwischenlage über einen wesentlichen Bereich bzw. eine nennenswert große (zur Fahrbahn parallele) Fläche des Achsträgers erstrecken, sind die dazwischen liegenden erfindungsgemäßen Faserbänder signifikant schmaler als das in Fzg.-Querrichtung gemessene Beitenmaß oder als das in Fzg.-Längsrichtung gemessene Längenmaß der Decklage(n), welche sich jedenfalls in der Fzg.-Querrichtung betrachtet zumindest von einem der Längsträger des Achsträgers zum anderen Längsträger des Achsträgers, an welchen Längsträgern das Versteifungselement üblicherweise befestigt ist, erstrecken.

Bekanntlich ist ein Fzg.-Achsträger aus einem linksseitigen und einem rechtsseitigen sich jeweils zumindest annähernd in Fzg.-Längsrichtung erstreckenden Längsträger, welche über zumindest einen, vorzugsweise mehrere sich zumindest annähernd in Fzg.-Querrichtung erstreckende Querträger miteinander verbunden sind, zusammengesetzt, welche Träger hier auch als Einzelträger des Achsträgers bezeichnet werden.

Erläutert wird nun der oben verwendete Begriff des gerichteten Endlosfaser-Bandes. Hierunter ist ein aus den besagten Fasern letztlich zusammen mit Kunststoffmaterial gebildetes Band zu verstehen, dessen Fasern gezielt ausgerichtet sind, nämlich in Längsrichtung des Bandes. Als Fasern kommen dabei die allgemein sog. Endlosfasern zum Einsatz. Dass ein solches Band bzw. Endlosfaserband in dessen Querrichtung betrachtet nennenswert schmaler ist als das Breitenmaß oder Längenmaß des Versteifungselements wurde bereits im vorstehendem Absatz gesagt. In einem erfindungsgemäßen Achsträger-Versteifungselement sind nun zwischen einer der sich vollflächig über dem Versteifungselement erstreckenden Decklagen und einer sich zumindest annähernd analog diesen zumindest annähernd vollflächig über dem flächigen Versteifungselement erstreckenden Zwischenlage zumindest zwei (oder auch mehrere) solcher Endlosfaser-Bänder vorgesehen, welche solchermaßen angeordnet sind, dass sie zusammen betrachtet keine sich vollflächig über dem Versteifungselement erstreckende Struktur bilden. Beispielsweise sind also nicht mehrere Endlosfaserbänder zueinander parallel direkt aneinander angrenzend nebeneinander angeordnet. Vielmehr sind diese Endlosfaser-Bänder solchermaßen angeordnet, dass sie das Versteifungselement gezielt verstärken.

Was die Anordnung und/oder Ausrichtung der Endlosfaserbänder betrifft, so können sich diese in einem (wie üblich) zumindest annähernd viereckigen Versteifungselement zumindest näherungsweise längs dessen beiden Diagonalen erstrecken und folglich kreuzen. Insbesondere Kräfte, die nicht in Fzg.-Längsrichtung in den Achsträger eingeleitet werden (bspw. aufgrund eines schräg zur Fzg.-Achse erfolgenden Crashs) werden damit bestmöglich aufgenommen und weitergeleitet. Insbesondere jedoch wird vorgeschlagen, dass sich Endlosfaserbänder in einer vertikalen Projektion auf das am Fahrzeug montierte Versteifungselement betrachtet mit zumindest einem Einzelträger des Achsträgers, bspw. mit dessen Längsträgern und/oder einem Querträger zumindest annähernd decken. Damit ergibt sich eine besonders intensive Versteifung bzw. Kraftübertragung zwischen den Einzelträgern des Achsträgers und dem an diesem befestigten flächigen Faserverbundwerkstoff-Versteifungselement.

Im Übrigen können in einer vorteilhaften Ausführungsform der vorliegenden Erfindung auch die genannten Decklagen und/oder die genannte Zwischenlage mit gerichteten, d.h. gezielt ausgerichteten bzw. orientierten Fasern gestaltet sein. Dabei kann im Hinblick auf eine günstige Kräfteübertragung sowohl die untere als auch die obere Decklage aus ihrerseits jeweils zwei Lagen von gerichteten Fasern gebildet sein, die sich kreuzend jeweils unter einem Winkel von ca. 45° gegenüber der Fzg.-Längsachse verlaufen, während die ebenfalls vorzugsweise Endlosfasern der Zwischenlage im wesentlichen in Fzg.-Querrichtung verlaufen. Alternativ zur soweit beschriebenen Faser-Orientierung in den Decklagen und in der Zwischenlage können für diese Lagen aber auch Wirrfasermatten mit nicht gezielt ausgerichteten Langfasern oder Kurzfasern vorzugsweise aus recyceltem Material zum Einsatz kommen.

Ein erfindungsgemäßes Faserverbund-Versteifungselement weist wie Faserverbundbauteile allgemein gegenüber herkömmlichen metallischen Bauteilen ein deutlich reduziertes Eigengewicht auf. Um eine gute Steifigkeit, Festigkeit sowie eine hohe Torsionssteifigkeit in das Bauteil einzutragen, sind erfindungsgemäß mehrere Endlosfaserbänder, welche jedes für sich gegenüber den Decklagen schmal ist, im Versteifungselement integriert. Durch die erfindungsgemäße Verwendung von gerichteten Endlosfaserbändern sind im Versteifungselement gezielt stabile Lastpfade ausgebildet, die einwirkende Verformungskräfte oder Aufprallimpulse entlang der Ausrichtung der Endlosfaser-bänder weiterleiten und damit letztlich gezielt auf die Kraftfahrzeugkarosserie zu verteilen in der Lage sind, womit einer lokalen Deformation und insbesondere einer Zerstörung von Fahrzeugstrukturen effektiv entgegengewirkt werden kann. Die Verwendung von Endlosfaserbändern hat ferner den Vorteil, dass bei der Herstellung des Faserverbund-Schubfelds weniger Materialverschnitt auftritt, da die Endlosfaserbänder einfach in der gewünschten Breite hergestellt und bedarfsgerecht abgelängt werden können. Ein Konturzuschnitt der Bänder ist nicht erforderlich. Der Bandzuschnitt kann auf einfache und kostengünstige Weise beispielsweise mittels einer Schlagschere oder eines Stanzprozesses erfolgen, wodurch die Herstellkosten weiter gesenkt werden können. Besonders bevorzugt wird das Versteifungselement als SMC (sheet molding compound) ausgebildet oder per Kunststoffspritzguss hergestellt, da somit zudem eine Endbearbeitung des Faserverbundbauteils entfällt. Das Bauteil wird hierbei mit der gewünschten Geometrie vorzugsweise werkzeugfallend ausgebildet, wobei die Endlosfasern innerhalb des Bauteils enden und kein Werkzeugauslauf erforderlich ist.

Die Fasern des Faserverbundmaterials können Kohlenstofffasern und/oder Glasfasern und/oder Aramidfasern und/oder Basaltfasern sein, da sich diese Fasermaterialien durch eine gute Verfügbarkeit und Verarbeitbarkeit bei sehr guter Stabilität und geringem Eigengewicht auszeichnen. Glasfasern sind dabei im Hinblick auf mögliche Korrosion im Zusammenwirken mit umliegenden metallischen Bauteilen besonders günstig.

Zur weiteren Erhöhung der Steifigkeit kann das zumindest annähernd flächige Faserverbundwerkstoff-Versteifungselement eines erfindungsgemäßen Fzg.-Achsträgers mindestens eine Verstärkungsstruktur in Form einer oder mehrerer Sicken und/oder eines oder mehrerer Dickensprünge und/oder einer oder mehrerer Rippen aufweisen, d.h. das Versteifungselement ist solchermaßen strukturiert. Neben einer entsprechenden eigenständigen Formgebung der Decklage oder der Decklagen kommt hier auch das Einbringen eigenständiger Bauelemente in das Versteifungselement in Frage, welche vorzugsweise ebenfalls aus faserhaltigen Materialien gebildet sein können und bspw. mittels Hinterspritzen im Spritzguss oder durch Pressen in SMC-Bauweise ausgebildet und mit dem flächigen Faserverbund-Versteifungselement verbunden sein können. Ebenfalls möglich ist ein Verkleben eines eigenständigen Verstärkungselements mit dem Versteifungselement. So ist bei möglichst geringem Gewicht eine bestmögliche Steifigkeit desselben erzielbar. Vorzugsweise werden solche aus der zur Fahrbahn parallelen Ebene des annähernd flächigen Versteifungselements herausragende Verstärkungselemente oder Verstärkungsstrukturen an der dem Fzg.-Aufbau zugewandten oberen Decklage vorgesehen, während die der Fahrbahn zugewandte untere Decklage zur Erzielung guter aerodynamischer Eigenschaften vorzugsweise glatt bzw. eben ausgebildet ist. Dort kann durch Vorsehen einer Decklage mit Glasfasern als Fasermaterial Schäden durch Steinschlag oder dgl. vorgebeugt werden.

Weiter vorteilhaft ist die Korrosionsstabilität des Versteifungselements sowie der daran angrenzenden Bauteile, wie insbesondere der Einzelträger des Achsträgers, aber auch radführender Lenker oder anderen, dadurch erhöht, dass an etwaigen Verbindungsstellen zum Anbinden und Befestigen, d.h. an Kontaktstellen zwischen diesen Bauteilen und dem Faserbund-Versteifungselement ein konstruktiver Luftspalt und/oder eine korrosionshemmende Beschichtung vorgesehen sind.

Gemäß einer vorteilhaften Weiterbildung kann ein Verbindungselement und/oder eine Aufnahmevorkehrung bzw. eine Anschlussvorrichtung für zumindest ein weiteres Bauteil in das Faserverbund-Versteifungselement integriert sein. Ein solches Verbindungselement oder eine solche Aufnahmevorkehrung kann beispielsweise aus einem keramischen oder metallischen Werkstoff oder ebenfalls aus einem Kunststoff gebildet sein und gestattet sein, eine Anbindung oder Befestigung weiterer Bauteile und/oder eine Befestigung des Versteifungselements am Achsträger oder an Teilen des FahrzeugAufbaus zu ermöglichen. Durch das Einbetten bzw. Integrieren solcher Elemente in das Faserverbundbauteil (Versteifungselement) werden diese genannten Elemente fest integrierter Bestandteil des Faserverbundbauteils und erhöhen dessen Funktionalität.

Weiter wird vorgeschlagen, zur Erzielung einer insbesondere akustischen Dämpfungseigenschaft des Schubfelds in diesem ein viskoelastisches Material, vorzugsweise in Form einer Schicht von Dämmmaterial, welches bspw. eine gummielastische Matte sein kann, vorzusehen. Diese Schicht kann dabei quasi eine eigenständige Lage im Versteifungselement bilden.

Infolge der erfindungsgemäßen Ausgestaltungen und Weiterbildungen ergeben sich insbesondere folgende Vorteile: Die mechanischen Eigenschaften des Versteifungselements, wie statische und dynamische Steifigkeit, werden verbessert. Die Festigkeit des Versteifungselements ist erhöht. Das Crash-Verhalten des Versteifungselements wird durch die materialoptimierte Faserverbundbauweise verbessert. Lokal einwirkende Verformungsenergien können somit dezentralisiert und gezielt über die gebildeten Lastpfade abgeleitet werden. Die Fahrdynamik des Fahrzeugs und dessen aerodynamische Eigenschaften und Akustik können durch das erfindungsgemäße Versteifungselement verbessert werden. Das Gewicht des Versteifungselements ist bei gleichen bzw. besseren funktionalen Eigenschaften geringer als bei der herkömmlichen Metall-Bauweise. Eine Integration und Befestigung von weiteren Bauteilen ist ermöglicht. Schäden durch Steinschlag kann einfach vorgebeugt werden. Der Herstellprozess des Versteifungselements ist vereinfacht und damit können die Herstellkosten gesenkt werden.

Diese und weitere Einzelheiten, Merkmale und Vorteile der Erfindung ergeben sich auch aus der nachfolgenden Beschreibung und den Figuren. Es zeigt
- Figur 1: eine schematische Darstellung der verschiedenen Lagen eines erfindungsgemäßen Achsträger- Versteifungselements,
- Figur 2: eine schematische Aufsicht auf eine Zwischenlage eines erfindungsgemäßen Achsträger- Versteifungselements mit darauf liegenden Endlosfaserbändern,
- Figur 3: eine schematische räumliche Darstellung einer weiteren möglichen Ausführungsform einer besonders gestalteten Lage eines erfindungsgemäßen Achsträger-Versteifungselements, sowie
- Figur 4a: eine Aufsicht auf einen Teil der Decklage einer weiteren möglichen Ausführungsform eines erfindungsgemäßen AchsträgerVersteifungselements, von welchem Teilabschnitt in
- Figur 4b: der Schnitt B-B aus Fig.4a dargestellt ist.

In den Figuren sind nur die hier interessierenden Teile und Komponenten dargestellt, alle übrigen Elemente sind der Übersichtlichkeit halber weggelassen. Insbesondere gilt dies für einen erfindungsgemäßen Achsträger als solchem, an welchem ein erfindungsgemäß gestaltetes Versteifungselement vorzugsweise lösbar befestigt ist. Dargestellt sind folglich nur das Versteifungselement oder Bestandteile desselben, während der Achsträger ähnlich oder vergleichbar dem eingangs genannten Stand der Technik gestaltet sein kann.

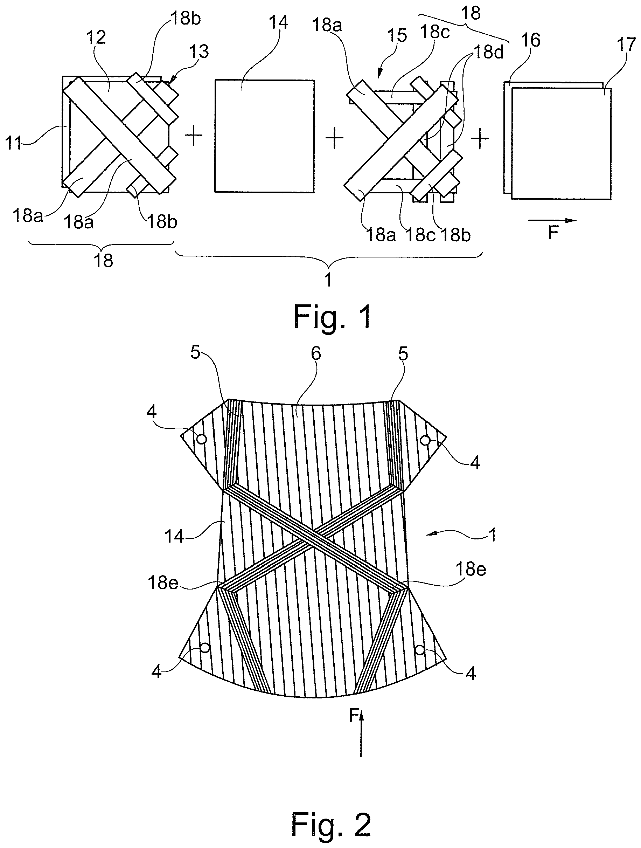

In Figur 1 sind einzelne durch Faserverbundmaterial bzw. Faserverbundkunststoff gebildete Lagen 11 - 17 eines erfindungsgemäßen Achsträger-Versteifungselements 1 teils sich überdeckend, teils nebeneinander liegend äußerst abstrakt dargestellt. Selbstverständlich liegt die in Figur 1 dargestellte Anordnung der Lagen nebeneinander so niemals vor, vielmehr sei die in dieser Figur linksseitige unterste Lage 11 beispielswiese die untere der Fahrbahn zugewandte Decklage 11 des Versteifungselements 1, auf welcher deckungsgleich, d.h. mit gleicher Abmessung die nächste Lage 12 aufgelegt ist. Sich (am im Fzg. eingebauten Versteifungselement 1) in vertikaler Richtung weiter von der Fahrbahn entfernend folgt daraufhin eine Lage 13, die durch mehrere Endlosfaserbänder 18 gebildet ist. Als nächste auf diesen Endlosbändern 18 liegende Lage folgt eine sog. Zwischenlage 14, dies sich zumindest annähernd vollflächig über die gesamte Fläche des Versteifungselements 1 erstreckt und auf welche abermals näher zum Fahrzeug-Aufbau hin eine Lage 15 folgt, die wieder von mehreren Endlosfaserbändern 18 gebildet ist. Quasi gespiegelt gegenüber Zwischenlage 14 folgen daraufhin zwei obere Lagen 16, 17, wobei die oberste Lage 17 die dem Fahrzeug-Aufbau zugewandte Decklage 17 ist. Die Lagen 11, 12, 14, 16 und 17 sind dabei in ihrer Ebene betrachtet von im wesentlichen gleicher Abmessung, während die Endlosfaserbänder 18 schmal gegenüber diesen genannten Lagen und somit auch gegenüber den Decklagen 11, 17 sowie gegenüber der Zwischenlage 14 sind.

Im fertigen Zustand des Versteifungselements 1, in welchem die Lagen 11 - 17 im wesentlichen deckungsgleich (mit Ausnahme der Lagen 13 und 15 mit den Endlosfaserbändern 18) übereinander liegen, bilden diese Endlosfaserbänder 18 gezielt Lastpfade im zumindest annähernd flächigen Versteifungselement 1 aus, welche insbesondere im Crash-Fall die Aufprallimpulse dezentralisieren und geeignet über die Struktur des Achsträgers, an welchem das Versteifungselement 1 befestigt ist, ableiten.

Weiterhin auf Fig.1 Bezug nehmend sind mit den Bezugsziffern 18a in der Lage 13 zwei Endlosfaserbänder (18) gekennzeichnet, die sich - so wie dies weiter oben allgemein beschrieben wurde - im zumindest annähernd viereckigen flächigen Versteifungselement 1 zumindest näherungsweise längs dessen beiden Diagonalen erstreckenden und folglich kreuzen. Anhand des Pfeiles F, welcher die sich in Richtung der Längsachse des mit einem erfindungsgemäßen Achsträger mit einem solchen Versteifungselement 1 ausgerüsteten Kraftfahrzeugs erstreckende Fahrtrichtung des Kraftfahrzeugs widergibt, geht hervor, dass in den beiden vorderen Eckbereichen des Versteifungselements 1 weitere annähernd parallel zu diesen "diagonalen" Endlosfaserbändern 18a ausgerichtete und damit selbstverständlich kürzere und dafür noch schmalere Endlosfaserbänder 18b in dieser Lage 13 vorgesehen sind.

Auch in der Lage 15 zwischen der Zwischenlage 14 und den beiden oberen Lagen 16 und 17 sind Endlosfaserbänder 18a, 18b vorgesehen, die wie diejenigen mit der gleichen Bezugsziffer in der Lage 13 ausgerichtet sind. Weiterhin sind in der Lage 15 noch in Fzg.-Längsrichtung (bzw. Fahrtrichtung F) ausgerichtete Endlosfaserbänder 18c vorgesehen, die solchermaßen im Seitenbereich des Versteifungselements 1 angeordnet sind, dass jedes dieser Endlosfaserbänder 18c in einer vertikalen Projektion mit einem (figürlich nicht dargestellten Einzelträger bzw. Längsträger des Achsträgers zumindest annähernd zur Deckung (Überdeckung) kommt. Weiterhin sind in der Lage 15 noch in Fzg.-Querrichtung ausgerichtete Endlosfaserbänder 18d vorgesehen, die solchermaßen im Frontbereich des Versteifungselements 1 angeordnet sind, dass jedes dieser Endlosfaserbänder 18d in einer vertikalen Projektion mit einem (figürlich nicht dargestellten Einzelträger bzw. Querträger des Achsträgers zumindest annähernd zur Deckung (Überdeckung) kommt.

In Fig.2 ist eine ebene Schnitt-Ansicht einer weiterem mögliche Ausführungsform eines erfindungsgemäßen Versteifungselements 1 gezeigt, wobei die Blickrichtung zur Fahrbahn hin weist und man neben der Zwischenlage 14 auf dieser vorgesehene Endlosfaserbänder 18e erkennt, die abschnittsweise diagonal (und sich dabei kreuzend) verlaufen, abschnittsweise aber auch mehr oder weniger in Fzg.-Längsrichtung (vgl. Pfeil F) ausgerichtet sind. Die in den Endlosfaserbändern 18e sowie in der Zwischenlage 14 eingezeichneten Linien sollen die Ausrichtung der im wesentlichen parallel zueinander verlaufenden Endlosfasern im jeweiligen Faserverbundmaterial wiedergeben. Hier verlaufen somit - anders als weiter oben beispielhaft genannt - die Endlosfasern in der Zwischenlage 14 in Fzg.-Längsrichtung. Mit der Bezugsziffer 4 sind dabei in dieser Figur Löcher im Randbereich des Versteifungselements 1 gekennzeichnet, über welche das Versteifungselement 1 am Fahrzeug-Aufbau befestigt werden kann.

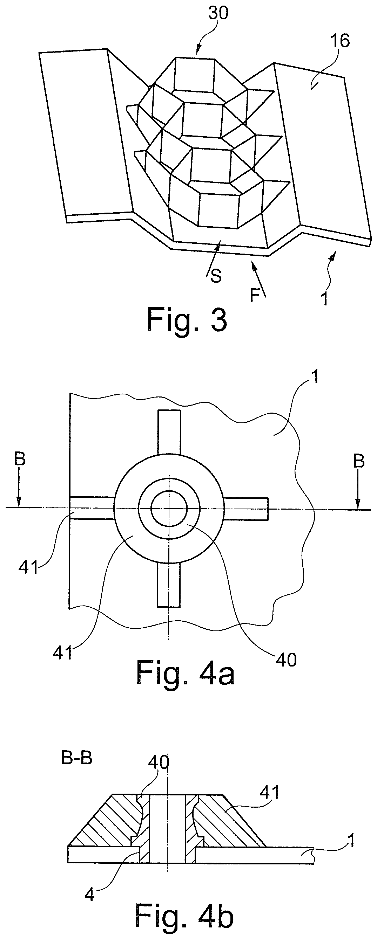

Figur 3 zeigt in einer räumlichen Darstellung mit Blickrichtung (im Einbauzustand des Versteifungselements 1 am Fahrzeug) von schräg unten quasi im Hintergrund eine obere Decklage 16 (und insbesondere deren Innenseite), so dass hier das Versteifungselement 1 geschnitten dargestellt ist. Man erkennt, dass zumindest die obere Decklage 16 nicht eben strukturiert ist, sondern eine großflächige Sicke S aufweist oder bildet, d.h. im Einbauzustand zum Fahrzeug-Aufbau hin quasi "ausgebeult", d.h. dreidimensional ausgeformt ist. Diese Sicke S bzw. Ausstülpung oder dgl. verläuft vorzugsweise in Fahrtrichtung F. Innerhalb dieser Sicke S (oder Ausstülpung oder Ausbeulung S) ist ein hier annähernd wabenförmig gestaltetes Verstärkungselement 30 in Form eines Inserts vorgesehen, welches beispielsweise aus Keramik, Metall oder Kunststoff gebildet sein kann und eine zusätzliche Versteifung des Versteifungselements 1 bewirkt. Das Verstärkungselement 30 ist zur besseren Verankerung im Versteifungselement 1 vorzugsweise formschlüssig und stoffschlüssig mit der Decklage 16 und einer weiteren sich hieran nach unten hin anschließenden Lage verbunden; alternativ kann ein solches Verstärkungselement (30) auch funktional durch eine geeignet geformte Lage von Faserverbundwerkstoff, bspw. in Form einer Verrippung, gebildet sein. All dies trägt erheblich zur Verstärkung des Achsträger-Versteifungselements 1 bei.

Die Figuren 4a, 4b zeigen lediglich einen kleinen Abschnitt eines möglichen erfindungsgemäßen Versteifungselements 1, und zwar ein in diesem vorgesehenes bzw. baulich integriertes Verbindungselement 40. Beispielsweise kann über ein solches Verbindungselement 40 das Versteifungselement 1 an der Fahrzeugkarosserie befestigt werden kann oder es können weitere Bauteile über dieses Verbindungselement 40 am Versteifungselement 1 befestigt werden. Dieses bzw. mehrere solcher oder funktional vergleichbarer Verbindungselemente 40 sind in den Faserverbundkunststoff des Versteifungselements 1 integriert, wobei das Verbindungselement 40 ein in einen Durchbruch 4 bzw. in ein Loch 4 im flächigen Versteifungselement 1 eingesetztes und sich im wesentlich senkrecht zu dieser Fläche erstreckendes Element ist, welches mittels zusätzlich aufgebrachtem und das Verbindungselement 40 hier teils kegelförmig umgebenden bzw. einhüllenden Kunststoffmaterial 41 des Versteifungselements 1 gehalten bzw. am/im Versteifungselement 1 verankert wird/ist. Von der rein kegelförmigen Ausgestaltung des Kunststoffmaterials 14 ragen auch noch mit der Bezugsziffer 41' bezeichnete Arme bezüglich des näherungsweise kreiszylindrischen Verbindungselements 40 in Radialrichtung weiter nach außen.

## Patentansprüche

1. Achsträger eines Kraftfahrzeugs mit einem als Faserverbundbauteil ausgebildeten und zumindest annähernd flächigen Versteifungselement (1), welches an Einzelträgern des Achsträgers, der seinerseits aus einem linksseitigen und einem rechtsseitigen sich jeweils zumindest annähernd in Fzg. -Längsrichtung erstreckenden Längsträger, welche über zumindest einen, vorzugsweise mehrere sich zumindest annähernd in Fzg. -Querrichtung erstreckende Querträger miteinander verbunden sind, zusammengesetzt ist, befestigt ist,
**dadurch gekennzeichnet, dass** das Versteifungselement (1) mehrlagig aufgebaut ist und neben einer unteren und einer oberen Decklage (11, 17) zumindest eine sich analog den Decklagen (11, 17) vollflächig erstreckende Zwischenlage (14) aufweist, oberhalb und unterhalb derer gegenüber dem in Fzg.-Querrichtung gemessenen Breitenmaß oder dem in Fzg.-Längsrichtung gemessenen Längenmaß der Decklagen (11, 17) schmale Endlosfaserbänder (18) mit gerichtet orientierten Fasern eingebracht sind, von denen sich zumindest eines in einer vertikalen Projektion mit einem Einzelträger des Achsträgers zumindest annähernd deckt.

2. Achsträger nach Anspruch 1 mit sich im zumindest annähernd viereckigen flächigen Versteifungselement (1) zumindest näherungsweise längs dessen beiden Diagonalen erstreckenden und folglich kreuzenden Endlosfaserbändern (18a).

3. Achsträger nach einem der vorhergehenden Ansprüche wobei eine Decklage des Versteifungselements (1) aus mehreren Einzellagen (11, 12, 16, 17) gebildet ist.

4. Achsträger nach einem der vorhergehenden Ansprüche, wobei im Versteifungselementmit (1) eine Verstärkungsstruktur in Form einer oder mehrerer Sicken (S) und/oder eines oder mehrerer Dickensprünge und/oder einer oder mehrerer Rippen vorgesehen ist.

5. Achsträger nach einem der vorhergehenden Ansprüche, wobei an einer Verbindungsstelle zwischen dem Versteifungselement (1) und einem weiteren Bauteil ein Luftspalt und/oder eine korrosionshemmende Beschichtung vorgesehen ist.

6. Achsträger nach einem der vorhergehenden Ansprüche, wobei die der Fahrbahn zugewandte Unterseite des Versteifungselements (1) eine Glasfaserdecklage (11) aufweist.

7. Achsträger nach einem der vorhergehenden Ansprüche, wobei im Versteifungselement (1) eine Schicht aus viskoelastischem Material vorgesehen ist.

8. Achsträger nach einem der vorhergehenden Ansprüche, wobei ein Verbindungselement zu (40) und/oder eine Aufnahmevorkehrung für ein(em) weiteres/weiteren Bauteil in das Versteifungselement (1) integriert ist.

9. Achsträger nach einem der vorhergehenden Ansprüche mit einem Versteifungselement (1) mit Kohlenstofffasern und/oder Glasfasern und/oder Aramidfasern und/oder Basaltfasern

## Claims

1. An axle support for a motor vehicle having a reinforcing element (1) which is formed as a fibrous composite component, is at least approximately planar, and which is secured to individual supports of the axle support, which in turn is assembled from a left-side and a right-side longitudinal chassis beam each extending at least approximately in the vehicle longitudinal direction and connected to one another via at least one, preferably a plurality of transverse chassis beams extending at least approximately in the vehicle transverse direction,
**characterised in that** the reinforcing element (1) is constructed in a multi-layered manner and, besides a lower and an upper cover layer (11, 17), has at least one intermediate layer (14) extending over the full planar extent, similarly to the cover layers (11, 17), with endless fibre bands (18) with fibres oriented in an aligned manner being introduced above and below the intermediate layer, said endless fibre bands being narrow relative to the width measured in the vehicle transverse direction or relative to the length of the cover layers (11, 17) measured in the vehicle longitudinal direction, at least one of said endless fibre bands at least approximately covering an individual support of the axle support in a vertical projection.

2. An axle support according to claim 1 with endless fibre bands (18a) extending in the at least approximately rectangular planar reinforcing element (1) at least approximately along the two diagonals thereof and consequently intersecting one another.

3. An axle support according to either one of the preceding claims, wherein a cover layer of the reinforcing element (1) is formed from a plurality of individual layers (11, 12, 16, 17).

4. An axle support according to any one of the preceding claims, wherein a reinforcing structure in the form of one or more beads (S) and/or one or more thickened portions and/or one or more ribs is provided in the reinforcing element (1).

5. An axle support according to any one of the preceding claims, wherein an air gap and/or an anti-corrosion coating is provided at a connection point between the reinforcing element (1) and a further component.

6. An axle support according to any one of the preceding claims, wherein the underside of the reinforcing element (1) facing towards the roadway has a glass fibre cover layer (11).

7. An axle support according to any one of the preceding claims, wherein a layer made of viscoelastic material is provided in the reinforcing element (1).

8. An axle support according to any one of the preceding claims, wherein a connection element to (40) and/or a receptacle for a further component are/is integrated in the reinforcing element (1).

9. An axle support according to any one of the preceding claims, with a reinforcing element (1) with carbon fibres and/or glass fibres and/or aramid fibres and/or basalt fibres.

## Revendications

1. Support d'essieu d'un véhicule comprenant un élément de rigidification (1) réalisé sous la forme d'un élément composite renforcé par des fibres et au moins essentiellement plat fixé sur des supports individuels du support d'essieu, qui, est constitué par un support longitudinal gauche et un support longitudinal droit s'étendant chacun au moins approximativement dans la direction longitudinale du véhicule, et qui sont reliés par au moins un, de préférence, par plusieurs supports transversaux s'étendant au moins approximativement dans la direction transversale du véhicule,
**caractérisé en ce que**
l'élément de rigidification (1) a une structure stratifiée et comporte, outre une couche de recouvrement inférieure et une couche de recouvrement supérieure (11, 17) au moins une couche intermédiaire (14) s'étendant sur toute sa surface comme les couches de recouvrement (11, 17), et au-dessus et au-dessous de laquelle en regard de la largeur considérée dans la direction transversale du véhicule ou en regard de la longueur considérée dans la direction longitudinale du véhicule des couches de recouvrement (11, 17) sont déposées d'étroites bandes de fibres sans fin (18) ayant des fibres orientées dont au moins une recouvre au moins approximativement en projection verticale un support individuel du support d'essieu.

2. Support d'essieu conforme à la revendication 1,
comportant des bandes sans fin (18a) s'étendant dans des éléments de rigidification (1), plans au moins essentiellement rectangulaires, au moins essentiellement le long de leurs deux diagonales et, par suite, se croisant.

3. Support d'essieu conforme à l'une des revendications précédentes, dans lequel une couche de recouvrement de l'élément de rigidification (1) est formé de plusieurs couches individuelles (11, 12, 16, 17).

4. Support d'essieu conforme à l'une des revendications précédentes, dans lequel dans l'élément de rigidification (1) il est prévu une structure de rigidification sous la forme d'une ou de plusieurs moulure(s) (S) et/ou d'une ou de plusieurs variation(s) brusque(s) d'épaisseur et/ou d'une ou de plusieurs nervure(s).

5. Support d'essieu conforme à l'une des revendications précédentes, dans lequel sur un emplacement de liaison entre l'élément de rigidification (1) et un autre composant, il est prévu un intervalle d'air et/ou un revêtement anticorrosion.

6. Support d'essieu conforme à l'une des revendications précédentes, dans lequel le côté inférieur tourné vers la chaussée de l'élément de rigidification (1) comporte une couche de recouvrement en fibres de verre (11).

7. Support d'essieu conforme à l'une des revendications précédentes, dans lequel il est prévu, dans l'élément de rigidification (1), une couche en matériau viscoélastique.

8. Support d'essieu conforme à l'une des revendications précédentes, dans lequel un élément de liaison (40) d'un autre composant et/ou un montage de réception d'un autre composant est intégré dans l'élément de rigidification (1).

9. Support d'essieu conforme à l'une des revendications précédentes, comprenant un élément de rigidification (1) en fibres de carbone et/ou en fibres de verre et/ou en fibres d'aramide et/ou en fibres de basalte.
